# EUROPEAN PATENT SPECIFICATION

(11) **EP 1 734 782 B1**
(45) Date of publication and mention of the grant of the patent: **15.02.2012**
(21) Application number: 06114153.7
(22) Date of filing: 18.05.2006
(51) Int. Cl.: H04W 36/28

(54) **A method of dual transfer mode handover**
Ein Verfahren für eine "Dual Transfer Mode" Weiterreichung
Procédé de transfert en mode double

(30) Priority: 14.06.2005 GB 0512041
(43) Date of publication of application: 20.12.2006
(73) Proprietor: Nokia Siemens Networks GmbH & Co. KG, 81541 München (DE)
(72) Inventor: Davis, Simon, Romsey, Hampshire SO51 7LX (GB); Isaacs, Kenneth, Salisbury, Wiltshire SP1 3FW (GB)

(56) References cited:
- EP-A- 1 404 064
- WO-A-01/35586
- ERICSSON: "Messages and Containers to be used for DTM Handover" 3GPP TSG GERAN#24BIS, TDOC G2-050229, [Online] 23 May 2005 (2005-05-23), - 27 May 2005 (2005-05-27) pages 1-7, XP002399613 Retrieved from the Internet: URL:http://www.3gpp.org/ftp/tsg_geran/Wg2_ Protocol_Aspects/GERAN2_24bis_Quebec/Docs/ > [retrieved on 2006-09-20]
- "Digital cellular telecommunications system (Phase 2+); Dual Transfer Mode (DTM); Stage 2 (3GPP TS 43.055 version 6.9.0 Release 6); ETSI TS 143 055" ETSI STANDARDS, EUROPEAN TELECOMMUNICATIONS STANDARDS INSTITUTE, SOPHIA-ANTIPO, FR, vol. 3-G1, no. V690, April 2005 (2005-04), XP014028285 ISSN: 0000-0001
- NOKIA: "DTM HANDOVER - Parallel CS and PS Handovers" 3GPP TSG GERAN #24BIS, TDOC G2-050257, [Online] 23 May 2005 (2005-05-23), - 27 May 2005 (2005-05-27) pages 1-8, XP002399614 Retrieved from the Internet: URL:http://www.3gpp.org/ftp/tsg_geran/Wg2_ Protocol_Aspects/GERAN2_24bis_Quebec/Docs/ > [retrieved on 2006-09-20]
- SIEMENS: "Enhanced DTM Handover Issues" 3GPP TSG GERAN#25, TDOC GP-051486, [Online] 20 June 2005 (2005-06-20), - 24 June 2005 (2005-06-24) pages 1-4, XP002399615 Retrieved from the Internet: URL:http://www.3gpp.org/ftp/tsg_geran/TSG_ GERAN/GERAN_25_Montreal/Docs/> [retrieved on 2006-09-20]

## Description

This invention relates to a method of dual transfer mode handover between a source base station and a target base station, in particular for 2^{nd} and 3^{rd} generation mobile phone systems, using general packet radio service (GPRS).

Conventionally, if a handover occurs in a system operating in dual transfer mode, i.e. operating with both circuit switched (CS) and packet switched (PS) resources allocated to a mobile station (MS), then the PS resources are dropped and a conventional CS handover is carried out. However, with the growing use of PS services, for applications such as video streaming or gaming, users are less tolerant of interruptions to the PS service in this way.

Ericsson: "Messages and Containers to be used for DTM Handover"; 3GPP TSG GERAN#24bis, Tdoc G2-050229; pages 1 to 7; 23.0.5.-27.05.2005; XP002399613 discloses that some information is required to show whether Handover Required and PS Handover Required messages relate to a dual transfer mode (DTM) Handover or to separate CS and PS Handovers.

ETSI: "Digital cellular telecommunications system (Phase2+); Dual Transfer Mode (DTM); Stage2"; 3GPP TS 43.055 V6.9.0; 04-2005; pages 1 to 36; XP14028285 discloses that for a dual transfer mode handover of a mobile terminal the CS connection takes preference over the PS connection being re-established after the CS connection is handed over.

NOKIA: "DTM HANDOVER - Parallel CS and PS Handovers"; 3GPP TSG GERAN#24bis, Tdoc G2-050257; pages 1 to 8; 27.5.2005; XP 002399614 discloses that for a dual transfer mode handover the coordination is achieved via an indication element added to the handover requests for CS and PS connections and synchronization is achieved utilizing timers.

In accordance with the present invention, there is provided a method of dual transfer mode handover between a source base station subsystem and a target base station subsystem, the method comprising preparing messages to a circuit switched network and to a packet switched network indicating a requirement for handover; adding an identifier to each message, sending each message to its respective network; allocating resources in each network and signalling to the target base station subsystem that a handover is requested; wherein the identifier is the same for both networks and is a unique identifier for a particular mobile terminal and for a particular handover attempt; the method further comprising coordinating CS and PS requests at the target base station subsystem, based on the unique identifier; sending an acknowledgement to the respective networks; coordinating handover commands from each network at the source base station subsystem, based on the unique identifier, then sending a dual transfer mode handover command from the source base station subsystem to the mobile terminal.

By providing a unique identifier, the source base station is able to coordinate the messages indicating a successful handover from both domains, by simply waiting for messages with the same identifier to be received.

Preferably, the identifier comprises a source cell identifier and a number allocated by a source base station sub-system.

Allocating a number in this way, in addition to the source cell identifier gives a clear indication of which transaction it relates to. If a fault occurs in only one domain, then the request can be resent and still coordinated with the successful response from the other domain.

Alternatively, the identifier comprises an international mobile subscriber identifier.

Preferably, the allocated number is chosen as the next in line from a circular number space.

An example of a method of dual transfer mode handover between a source base station subsystem and a target base station subsystem in accordance with the present invention will now be described with reference to the accompanying drawings in which:
Figure 1 is a block diagram of a system for carrying out the method of the present invention; and,
Figure 2 illustrates different identifiers for use in the method of Fig.1.

Within the global system for mobile communication (GSM) edge radio access network (GERAN) standardisation process there are proposals relating to improvements in the handover mechanism for terminals that are in dual transfer mode (DTM). DTM is a state where both circuit switched (CS) and packet switched (PS) resources are simultaneously allocated to a mobile station (MS). In the case of handover for such MSs, conventional mechanisms require PS resources to be dropped in a source cell, a normal dedicated mode CS handover to be performed and then the MS attempts to re-establish the PS resources in a target cell. The consequences of this are that packet services may be interrupted for a period in excess of 1 second which is not ideal when considering real-time packet services such as video streaming or interactive gaming applications.

It is desirable that PS handover signalling can be run in parallel to existing CS signalling mechanisms with some co-ordination between these entities in the target and source base station subsystems (BSS). A problem with this approach is that co-ordination is required in the source BSS and target BSS between the CS and PS signalling. In the target BSS radio resources can only be reserved when both the CS and PS requirements are made known from the CS and PS handover signalling respectively. Furthermore, the successful allocation of these resources can only be signalled back to the source BSS when both the CS and PS signalling has successfully arrived at the target BSS. The source BSS must wait until it receives success indications from both the PS and CS handover signalling before it passes the single DTM Handover Command to the MS.

Therefore, the source and target BSS need some means of identifying that these messages relate to the same DTM Handover procedure, so that they can co-ordinate the CS and PS signalling messages. This problem has not been addressed to date, since existing DTM Handover procedures simply drop the packet resources and perform handover in the CS domain only.

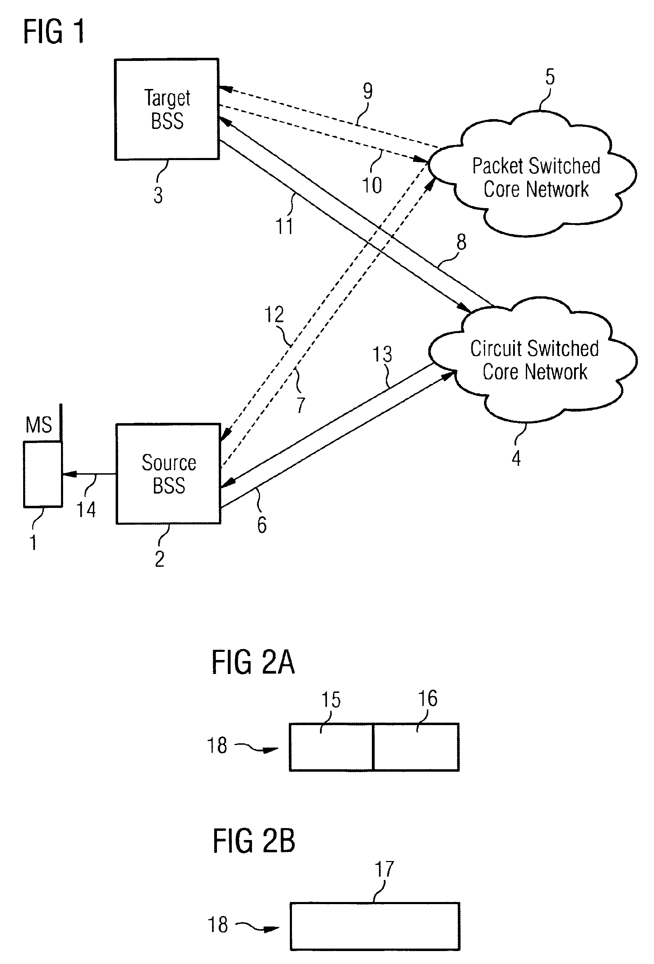

Fig. 1 is a block diagram illustrating a system and the method of the present invention. A mobile station 1 is moving from a source base station sub-system (BSS) 2 to a target BSS 3, giving rise to a need for a handover. The MS has both circuit switched (CS) and packet switched (PS) communications in progress and requires resources from both CS and PS networks 4, 5. The source BSS sends a handover required message 6 to the CS core network 4 and a PS handover required message 7 to the PS core network 5. To these messages, the source BSS adds a DTM handover transaction identifier 18, which is the same for both messages. This identifier (ID) can take various forms, but it needs to at least distinguish the message as being from one particular MS, rather than from any other one and preferably, the transaction ID is generated such that it is unique to the particular DTM handover signalling transaction for the source to target BSS.

As shown in Figs. 2a and 2b, examples of the identifier are the MS's international mobile station identifier (IMSI) 17, or an identifier created from a combination of a source cell identifier 15 and a reference number 16 allocated by the source BSS 2, although not limited to these examples. The constructed transaction identifier, such as that illustrated by the Fig. 2b example, has certain advantages over a more permanent identifier, such as the mobile's IMSI, in that multiple handover attempts between the same mobile, in the same cell, and the target BSS can be easily distinguished thus avoiding possibly wrong co-ordination in the target BSS between previous signalling messages and new signalling messages. Another advantage is that there is the possibility for the source BSS to retry the handover if one domain fails, with possibly different resource requirements.

The CS and PS networks allocate respective resources and the CS core network 4 sends a handover request message 8 to the target BSS 3. Similarly, the PS core network sends a PS handover request message 9 to the target BSS. The target BSS 3 waits until it has received messages 8, 9, from both the CS and PS core networks, having the same transaction identifier 18 and uses this as a trigger to send its reply messages, adding this identifier to any responses. The responses from the target BSS are a PS handover request acknowledgment 10 to the PS core network and a handover request acknowledgement 11 to the CS core network. The networks then send to the source BSS 2, a handover command 13 from the CS core network and a PS handover command 12 from the PS core network, each including the identifier 18. The source BSS waits to receive responses with the same identifier 18 in both, then sends a DTM handover command message 14 to the mobile station. The decision as to when to fail the handover, for example if no CS resources are available, can be left to local policy in the source BSS.

Co-ordination between the two signalling domains is achieved by the inclusion of the transaction identifier, thus enabling existing handover signalling mechanisms (in PS and CS domains) to be used as they are, with a minimum degree of change to existing procedures.

## Claims

1. A method of dual transfer mode handover between a source base station subsystem (2) and a target base station subsystem (3), the method comprising preparing messages to a circuit switched (CS) network (4) and to a packet switched (PS) network (5) indicating a requirement for handover; adding an identifier to each message, sending each message to its respective network (4,5); allocating resources in each network (4,5) and signalling to the target base station subsystem (3) that a handover is requested; wherein the identifier is the same for both networks (4,5) and is a unique identifier for a particular mobile terminal (1) and for a particular handover attempt; the method further comprising coordinating CS and PS requests at the target base station subsystem (3), based on the unique identifier; sending an acknowledgement to the respective networks (4,5); coordinating handover commands from each network (4,5) at the source base station subsystem (2), based on the unique identifier, then sending a dual transfer mode handover command from the source base station subsystem (2) to the mobile terminal (1).

2. A method according to claim 1, wherein the identifier comprises a source cell identifier and an allocated number allocated by the source base station sub-system.

3. A method according to claim 1, wherein the identifier comprises an international mobile subscriber identifier.

4. A method according to claim 2, wherein the allocated number is chosen as the next in line from a circular number space.

5. A base station subsystem (2) adapted to act as a source base station subsystem for a dual transfer mode handover to a target base station subsystem (3), the base station subsystem (2) being configured to prepare messages to a circuit switched (CS) network (4) and to a packet switched (PS) network (5) indicating a requirement for the handover, the base station subsystem (2) being further configured to add an identifier to each message and send each message to its respective network (4, 5), wherein the identifier is the same for both networks (4, 5) and is a unique identifier for a particular mobile terminal (1) and for a particular handover attempt, the base station subsystem (2) being further configured to coordinate handover commands from each network (4, 5) based on the unique identifier and then send a dual transfer mode handover command to the mobile terminal (1).

6. A base station subsystem according to claim 5, wherein the identifier comprises a source cell identifier and an allocated number allocated by the source base station sub-system.

7. A base station subsystem according to claim 5, wherein the identifier comprises an international mobile subscriber identifier.

8. A base station subsystem according to claim 6, wherein the allocated number is chosen as the next in line from a circular number space.

9. A base station subsystem (3) adapted to act as a target base station subsystem for a dual transfer mode handover from a source base station subsystem (2), wherein the base station subsystem (3) is adapted to receive circuit switched (CS) and packet switched (PS) handover requests from a circuit switched network (4) and a packet switched network (5) respectively, the handover requests comprising an identifier that is the same for both networks (4, 5) and is a unique identifier for a particular mobile terminal (1) and for a particular handover attempt, the base station subsystem (3) being configured to coordinate the circuit switched (CS) and packet switched (PS) handover requests based on the unique identifier and send an acknowledgment to the respective networks (4, 5).

10. A base station subsystem according to claim 9, wherein the identifier comprises a source cell identifier and an allocated number allocated by the source base station sub-system

11. A base station subsystem according to claim 9, wherein the identifier comprises an international mobile subscriber identifier.

12. A base station subsystem according to claim 10, wherein the allocated number is chosen as the next in line from a circular number space.

13. A mobile communications system comprising a base station subsystem (2) according to any one of claims 5 to 8 and a base station subsystem (3) according to any one of claims 9 to 12.

## Patentansprüche

1. Verfahren zum Handover im Dual Transfer Mode zwischen einem Quellen-Basisstationssubsystem (2) und einem Ziel-Basisstationssubsystem (3), wobei das Verfahren Folgendes umfasst: Erstellen von Nachrichten an ein leitungsvermitteltes bzw. CS-Netz (4) und an ein paketvermitteltes bzw. PS-Netz (5), die eine Notwendigkeit von Handover angeben; Hinzufügen einer Kennung zu jeder Nachricht, Senden jeder Nachricht zu ihrem jeweiligen Netz (4, 5); Vergeben von Betriebsmitteln in jedem Netz (4, 5) und Signalisieren an das Ziel-Basisstationssubsystem (3), dass ein Handover angefordert wird; wobei die Kennung für beide Netze (4, 5) dieselbe ist und eine einzigartige Kennung für ein bestimmtes mobiles Endgerät (1) und für einen bestimmten Handover-Versuch ist; wobei das Verfahren ferner Folgendes umfasst: Koodinieren von CS- und PS-Anforderungen in dem Ziel-Basisstationssubsystem (3) auf der Basis der einzigartigen Kennung; Senden einer Bestätigung zu den jeweiligen Netzen (4, 5); Koordinieren von Handover-Befehlen von jedem Netz (4, 5) in dem Quellen-Basisstationssubsystem (2) auf der Basis der einzigartigen Kennung und dann Senden eines Handover-Befehls des Dual Transfer Mode von dem Quellen-Basisstationssubsystem (2) zu dem mobilen Endgerät (1).

2. Verfahren nach Anspruch 1, wobei die Kennung eine Quellenzellenkennung und eine vergebene Nummer, die durch das Quellen-Basisstationssubsystem vergeben wird, umfasst.

3. Verfahren nach Anspruch 1, wobei die Kennung einen International Mobile Subscriber Identifier umfasst.

4. Verfahren nach Anspruch 2, wobei die vergebene Nummer als die als nächste an die Reihe kommende aus einem zirkularen Nummernraum gewählt wird.

5. Basisstationssubsystem (2), das dafür ausgelegt ist, als ein Quellen-Basisstationssubsystem für ein Handover im Dual Transfer Mode an ein Ziel-Basisstationssubsystem (3) zu wirken, wobei das Basisstationssubsystem (2) dafür ausgelegt ist, Nachrichten an ein leitungsvermitteltes bzw. CS-Netz (4) und ein paketvermitteltes bzw. PS-Netz (5) zu erstellen, die eine Notwendigkeit des Handover angeben, wobei das Basisstationssubsystem (2) ferner dafür ausgelegt ist, eine Kennung zu jeder Nachricht hinzuzufügen und jede Nachricht zu ihrem jeweiligen Netz (4, 5) zu senden, wobei die Kennung für beide Netze (4, 5) dieselbe ist und eine einzigartige Kennung für ein bestimmtes mobiles Endgerät (1) und für einen bestimmten Handover-Versuch ist, wobei das Basisstationssubsystem (2) ferner dafür ausgelegt ist, Handover-Befehle von jedem Netz (4, 5) auf der Basis der einzigartigen Kennung zu koordinieren und dann den Handover-Befehl des Dual Transfer Mode zu dem mobilen Endgerät (1) zu senden.

6. Basisstationssubsystem nach Anspruch 5, wobei die Kennung eine Quellenzellenkennung und eine vergebene Nummer, die durch das Quellen-Basisstationssubsystem vergeben wird, umfasst.

7. Basisstationssubsystem nach Anspruch 5, wobei die Kennung einen International Mobile Subscriber Identifier umfasst.

8. Basisstationssubsystem nach Anspruch 6, wobei die vergebene Nummer als die als nächste an die Reihe kommende aus einem zirkularen Nummernraum gewählt wird.

9. Basisstationssubsystem (3), das dafür ausgelegt ist, als ein Ziel-Basisstationssubsystem für ein Handover des Dual Transfer Mode von einem Quellen-Basisstationssubsystem (2) zu wirken, wobei das Basisstationssubsystem (3) dafür ausgelegt ist, leitungsvermittelte bzw. CS- und paketvermittelte bzw. PS-Handover-Anforderungen von einem leitungsvermittelten Netz (4) bzw. einem paketvermittelten Netz (5) zu empfangen, wobei die Handover-Anforderungen eine Kennung umfassen, die für beide Netze (4, 5) dieselbe ist und eine einzigartige Kennung für ein bestimmtes mobiles Endgerät (1) und für einen bestimmten Handover-Versuch ist und das Basisstationssubsystem (3) dafür ausgelegt ist, die leitungsvermittelten bzw. CS- und paketvermittelten bzw. PS-Handover-Anforderungen auf der Basis der einzigartigen Kennung zu koordinieren und eine Bestätigung zu den jeweiligen Netzen (4, 5) zu senden.

10. Basisstationssubsystem nach Anspruch 9, wobei die Kennung eine Quellenzellenkennung und eine vergebene Nummer, die durch das Quellen-Basisstationssubsystem vergeben wird, umfasst.

11. Basisstationssubsystem nach Anspruch 9, wobei die Kennung einen International Mobile Subscriber Identifier umfasst.

12. Basisstationssubsystem nach Anspruch 10, wobei die vergebene Nummer als die als nächste an die Reihe kommende aus einem zirkularen Nummernraum gewählt wird.

13. Mobilkommunikationssystem, das ein Basisstationssubsystem (2) nach einem der Ansprüche 5 bis 8 und ein Basisstationssubsystem (3) nach einem der Ansprüche 9 bis 12 umfasst.

## Revendications

1. Un procédé de transfert en mode double entre un sous-système de station de base source (2) et un sous-système de station de base cible (3), le procédé comprenant la préparation de messages destinés à un réseau à commutation de circuits (CS) et à un réseau à commutation de paquets (PS) indiquant une demande de transfert, l'ajout d'un identifiant à chaque message, l'envoi de chaque message à son réseau respectif (4,5), l'attribution de ressources à chaque réseau (4, 5) et le signalement au sous-système de station de base cible (3) qu'un transfert est demandé, dans lequel l'identifiant est le même pour les deux réseaux (4, 5) et est un identifiant unique pour un terminal mobile particulier (1) et pour une tentative de transfert particulière, le procédé comprenant en outre la coordination des demandes CS et PS sur le sous-système de station de base cible (3), en fonction de l'identifiant unique, l'envoi d'un accusé de réception aux réseaux respectifs (4, 5), la coordination de commandes de transfert de chaque réseau (4, 5) sur le sous-système de station de base source (2), en fonction de l'identifiant unique, puis l'envoi d'une commande de transfert en mode double du sous-système de station de base source (2) au terminal mobile (1).

2. Un procédé selon la revendication 1, dans lequel l'identifiant comprend un identifiant de cellule source et un numéro d'attribution attribué par le sous-système de station de base source.

3. Un procédé selon la revendication 1, dans lequel l'identifiant comprend un identifiant international d'abonné mobile.

4. Un procédé selon la revendication 2, dans lequel le numéro d'attribution est choisi comme étant le numéro suivant dans un espace de numéros circulaire.

5. Un sous-système de station de base (2) adapté de façon à remplir le rôle de sous-système de station de base source pour un transfert en mode double vers un sous-système de station de base cible (3), le sous-système de station de base (2) étant configuré de façon à préparer des messages destinés à un réseau à commutation de circuits (CS) (4) et à un réseau à commutation de paquets (PS) (5) indiquant une demande de transfert, le sous-système de station de base (2) étant configuré en outre de façon à ajouter un identifiant à chaque message et à envoyer chaque message à son réseau respectif (4, 5), dans lequel l'identifiant est le même pour les deux réseaux (4, 5) et est un identifiant unique pour un terminal mobile particulier (1) et pour une tentative de transfert particulière, le sous-système de station de base (2) étant configuré en outre de façon à coordonner des commandes de transfert de chaque réseau (4, 5) en fonction de l'identifiant unique et ensuite à envoyer une commande de transfert en mode double au terminal mobile (1).

6. Un sous-système de station de base selon la revendication 5, dans lequel l'identifiant comprend un identifiant de cellule source et un numéro d'attribution attribué par le sous-système de station de base source.

7. Un sous-système de station de base selon la revendication 5, dans lequel l'identifiant comprend un identifiant international d'abonné mobile.

8. Un sous-système de station de base selon la revendication 6, dans lequel le numéro d'attribution est choisi comme étant le numéro suivant dans un espace de numéros circulaire.

9. Un sous-système de station de base (3) adapté de façon à remplir le rôle de sous-système de station de base cible pour un transfert en mode double à partir d'un sous-système de station de base source (2), dans lequel le sous-système de station de base (3) est adapté de façon à recevoir des demandes de transfert à commutation de circuits (CS) et à commutation de paquets (PS) provenant d'un réseau à commutation de circuits (4) et d'un réseau à commutation de paquets (5) respectivement, les demandes de transfert comprenant un identifiant qui est le même pour les deux réseaux (4, 5) et est un identifiant unique pour un terminal mobile particulier (1) et pour une tentative de transfert particulière, le sous-système de station de base (3) étant configuré de façon à coordonner les demandes de transfert à commutation de circuits (CS) et à commutation de paquets (PS) en fonction de l'identifiant unique et ensuite à envoyer un accusé de réception aux réseaux respectifs (4, 5).

10. Un sous-système de station de base selon la revendication 9, dans lequel l'identifiant comprend un identifiant de cellule source et un numéro d'attribution attribué par le sous-système de station de base source.

11. Un sous-système de station de base selon la revendication 9, dans lequel l'identifiant comprend un identifiant international d'abonné mobile.

12. Un sous-système de station de base selon la revendication 10, dans lequel le numéro d'attribution est choisi comme étant le numéro suivant dans un espace de numéros circulaire.

13. Un système de communication mobile comprenant un sous-système de station de base (2) selon l'une quelconque des revendications 5 à 8 et un sous-système de station de base (3) selon l'une quelconque des revendications 9 à 12.
